# FASCICULE DE BREVET EUROPEEN

(11) **EP 2 168 358 B1**
(45) Date de publication et mention de la délivrance du brevet: **17.04.2013**
(21) Numéro de dépôt: 08806038.9
(22) Date de dépôt: 19.06.2008
(51) Int. Cl.: H04L 29/12, H04L 12/18, H04L 12/24, H04L 29/08, G06F 11/22

(54) **PROCÉDÉS ET DISPOSITIFS POR LA COMMUNICATION DE DONNÉES DE DIAGNOSTIC DANS UN RÉSEAU DE COMMUNICATION TEMPS RÉEL**
VERFAHREN UND VORRICHTUNG ZUR KOMMUNIKATION DIAGNOSTISCHER DATEN IN EINEM ECHTZEIT-KOMMUNIKATIONSNETZWERK
METHODS AND DEVICES FOR DIAGNOSTIC DATA COMMUNICATION IN A REAL-TIME COMMUNICATION NETWORK

(30) Priorité: 28.06.2007 FR 0756129
(43) Date de publication de la demande: 31.03.2010
(73) Titulaire: AIRBUS OPERATIONS, 31060 Toulouse (FR)
(72) Inventeur: DESSERTENNE, Franck, F-31770 Colomiers (FR)
(74) Mandataire: Imbert de Tremiolles, Ghislain
(86) Numéro de dépôt international: PCT/FR2008/051104
(87) Numéro de publication internationale: WO 2009/007570

(56) Documents cités:
- JP-A- 8 237 285
- NARTEN T ET AL: "Neighbor Discovery for IP version 6 (IPv6); draft-ietf-ipv6-2461bis-11.t" IETF STANDARD-WORKING-DRAFT, INTERNET ENGINEERING TASK FORCE, IETF, CH, vol. ipv6, no. 11, mars 2007 (2007-03), XP015049437 ISSN: 0000-0004
- MARCEL WIGET SIMON BRYDEN GEOFF MATTSON NORTEL NETWORKS: "Dynamic VPLS solution over multicast enabled IP backbone; draft-wiget-dynamic-vpls-00.txt;" IETF STANDARD-WORKING-DRAFT, INTERNET ENGINEERING TASK FORCE, IETF, CH, décembre 1999 (1999-12), XP015036853 ISSN: 0000-0004
- DAVID C PLUMMER (DCP@MIT-MC): "An Ethernet Address Resolution Protocol -- or -- Converting Network Protocol Addresses to 48.bit Ethernet Address for Transmission on Ethernet Hardware; rfc826.txt" IETF STANDARD, INTERNET ENGINEERING TASK FORCE, IETF, CH, novembre 1982 (1982-11), XP015006811 ISSN: 0000-0003

## Description

La présente invention concerne des procédés et des dispositifs d'identification et de communication non intrusif entre un noeud serveur et plusieurs noeuds clients au sein d'un réseau commuté temps réel.

Un réseau de type «*switch fabric*» est basé sur une architecture commutée, c'est-à-dire que les équipements terminaux chargés de l'émission et de la réception des données s'organisent autour des commutateurs chargés du transport de ces données, à N entrées et N sorties. La communication est réalisée par l'envoi et la réception de paquets, ces derniers étant émis en parallèle.

De manière plus générale, l'invention concerne, dans un réseau de traitement de données en temps réel comprenant au moins un serveur et au moins un client, les principes régissant la communication de données de diagnostic entre ces éléments du réseau de sorte à être non intrusif sur la communication temps réel circulant par ailleurs sur ce même réseau.

L'invention s'applique notamment dans un réseau de simulation de composants d'un aéronef en temps réel, où un diagnostic de ces composants doit être effectué sans perturber le réseau de simulation.

La simulation de composants d'un aéronef est utilisée pour assurer le développement et l'intégration des systèmes électroniques et informatiques embarqués dans les aéronefs, en particulier avant le premier vol.

L'architecture de simulation comprend une pluralité de terminaux aussi appelés noeuds du réseau, chacun de ces terminaux étant apte à réaliser les calculs de simulation ou constituant l'interface électronique avec l'environnement réel, permettant de vérifier le fonctionnement des équipements réels de l'aéronef. Ainsi, cette architecture comprend notamment un terminal de simulation apte à émettre des données selon une séquence synchrone selon le principe requête / réponse.

Des noeuds du réseau sont constitués des calculateurs de simulation et des cartes d'entrée / sortie d'interfaces électroniques.

L'échange des données entre les différents noeuds du réseau est réalisé sur un port UDP (acronyme de «*User Datagram Protocol*» en terminologie anglo-saxonne) spécifique et en temps réel, c'est-à-dire que la simulation des comportements des équipements est réalisée à la vitesse de leur déroulement réel.

Afin de réaliser des diagnostics sur une telle architecture réseau, il peut être connecté à tout moment au réseau un équipement de diagnostic apte à identifier les dysfonctionnements des différents noeuds du réseau.

Comme décrit dans le document *"*Neighbor discovery for IP version 6 (IPv6)", Narten et al., Internet engineering task force, IETF, CH, vol. ipv6, no, 11, mars 2007, il existe un protocole d'identification de voisinage pour IPv6. En particulier, il existe un mécanisme pour identifier un noeud voisin lorsqu'un paquet de données doit être envoyé à celui-ci mais que son adresse physique n'est pas connue. La réponse du noeud voisin permet de déterminer son adresse et ainsi de transmettre le paquet de données.

De façon similaire, le document "Dynamic VPLS solution over multicast enabled IP backbone", Wiget et al., IETF standard working draft, Internet engineering task force, IETF, CH, décembre 1999, vise un système de création de segments de réseau privé virtuel basé, notamment, sur le protocole ARP. Selon ce système, l'adresse physique d'un noeud voisin peut être déterminée à partir de son adresse logique. De même, la demande de brevet JP 08 237285 décrit la mise en oeuvre du protocole ARP pour identifier les adresses logiques de noeuds voisins et les transmettre à ces différents noeuds.

Toutefois, sans une phase d'apprentissage spécifique de la topologie du réseau, les échanges de messages génèrent un trafic supplémentaire sur le réseau entre l'équipement de diagnostic et les différents noeuds du réseau. Les messages échangés sont par typiquement des messages ARP (acronyme de « *Address Resolution Protocol* » en terminologie anglo-saxonne).

Une telle mise en oeuvre présente l'inconvénient qu'un grand nombre de messages ARP entre l'équipement de diagnostic et les noeuds du réseau sont transmis ce qui perturbe l'exécution en temps réel de la simulation.

La présente invention a pour objet de remédier à au moins un des inconvénients des techniques et processus de l'art antérieur précité. Pour ce faire, l'invention propose notamment un procédé et un dispositif d'identification dynamique, dans un noeud serveur, d'au moins un noeud client dans un réseau de communication et un procédé et un dispositif d'identification, dans un noeud client, d'un noeud serveur dans un réseau de communication aptes à respecter des contraintes fortes telles que la non perturbation du déroulement en temps réel de la simulation.

L'invention est définie dans les revendications 1, 3, 4, 5, 9 et 10 respectivement. Des modes de réalisation particuliers sont définis dans les revendications dépendantes.

. L'invention a ainsi pour objet un procédé d'identification, dans un noeud serveur connecté à un réseau, d'au moins un noeud client connecté au réseau, le procédé comprenant les étapes suivantes,
- une étape d'émission d'un message d'identification à au moins un noeud client, le message d'identification comprenant l'adresse physique et l'adresse Internet dudit noeud serveur, et
- une étape de réception d'au moins un message contenant le couple d'adresses d'au moins un noeud client en réponse à l'étape d'émission d'un message d'identification, un couple d'adresses d'un noeud client comprenant une adresse physique (MAC) et une adresse Internet (IP).

Le procédé selon l'invention permet ainsi de déterminer dynamiquement la topologie du réseau sans nécessiter de connexion point à point ni la connaissance préalable de sa définition topologique. Ce procédé permet de respecter des contraintes de non intrusion permettant le déroulement de simulations en temps réel.

De façon avantageuse, ledit au moins un couple d'adresses de noeud client est mémorisé statiquement dans une table de correspondance entre une adresse physique et une adresse Internet, telle que la table ARP du système d'exploitation, dans ledit noeud serveur pour contrôler les messages générés par le système d'exploitation, c'est-à-dire par exemple pour contraindre les mécanismes ARP.

Selon un mode de réalisation particulier, l'émission dudit message d'identification est réalisée en mode *multicast.*

L'invention a aussi pour objet un procédé d'échange de données de diagnostic dans un réseau entre un noeud du réseau et un terminal de diagnostic connecté au réseau, le procédé comprenant les étapes suivantes,
- identification d'au moins un noeud du réseau selon le procédé d'identification décrit précédemment ; et,
- transmission d'une commande de diagnostic audit au moins un noeud identifié du réseau.

Le procédé selon l'invention permet ainsi d'échanger des données de diagnostic sans perturber le fonctionnement temps réel du réseau tout en gardant des caractéristiques standard de réseau.

L'invention a également pour objet un procédé d'identification, dans un noeud client connecté à un réseau, d'un noeud serveur connecté au réseau, le procédé comprenant les étapes suivantes,
- une étape de réception d'un message d'identification provenant dudit noeud serveur, le message d'identification comprenant l'adresse physique (MAC) et l'adresse Internet (IP) dudit noeud serveur, et
- une étape d'émission audit noeud serveur d'un message contenant le couple d'adresses dudit noeud client en réponse à l'étape de réception du message d'identification, le couple d'adresses comprenant une adresse physique (MAC) et une adresse Internet (IP) du noeud client.

De façon avantageuse, ledit au moins un couple d'adresses du noeud serveur est mémorisé statiquement dans une table de correspondance entre une adresse physique et une adresse Internet, telle que la table ARP du système d'exploitation, dans ledit noeud client.

L'invention a aussi pour objet un procédé d'échange de données de diagnostic, dans un noeud client connecté à un réseau, caractérisé en ce qu'il comprend les étapes suivantes,
- identification d'au moins un noeud serveur selon le procédé d'identification décrit précédemment ; et,
- activation d'une tâche de gestion de données de diagnostic à la réception d'une commande de diagnostic selon l'état d'activation d'une tâche de gestion de données de simulation.

Le procédé selon l'invention met ainsi en oeuvre une gestion par priorité des services pour limiter l'intrusion des opérations de diagnostic sur des opérations de simulations.

Avantageusement, les tâches de gestion de données de diagnostic et de simulation utilisent des ports différents.

L'invention a aussi pour objet un programme d'ordinateur comprenant des instructions adaptées à la mise en oeuvre de chacune des étapes des procédés décrits précédemment.

L'invention a également pour objet un dispositif comprenant des moyens adaptés à la mise en oeuvre de chacune des étapes des procédés décrits précédemment.

D'autres avantages, buts et caractéristiques de la présente invention ressortent de la description détaillée qui suit, faite à titre d'exemple non limitatif, au regard des dessins annexés dans lesquels:
- la figure 1 illustre une architecture réseau de simulation intégrant un terminal de diagnostic conformément à l'invention ; et
- la figure 2 présente les couches de programmation du système et les interactions avec les modules de diagnostic client et serveur conformément à l'invention.

Conformément à l'invention, le diagnostic d'un réseau de simulation de composants, notamment de composants avioniques, est centralisé et intégré. Cette simulation est basée sur des contraintes temps réel fortes de sorte que celle-ci ne doit nullement être perturbée afin de simuler au mieux le comportement réel des composants.

Les fonctionnalités du diagnostic sont notamment les suivantes :
- détermination des noeuds réseau qui sont présents, notamment de façon centralisée, c'est-à-dire sans avoir une connexion point à point directe avec chacun des équipements d'interface électronique utilisés ;
- surveillance en temps réel avec la possibilité de déporter l'interface graphique de surveillance et de diagnostic ;
- établir la cartographie des noeuds du réseau, notamment la liste des équipements du réseau et leur configuration (logiciels, matériels constitutifs et paramétrage) ;
- consulter ou modifier le paramétrage des noeuds du réseau ;
- surveiller les paramètres internes et élaborer des statistiques ;
- forcer des voies d'entrée/sortie et d'autres paramètres ;
- enregistrer en temps réel des paramètres, notamment en mémoire volatile ;
- enregistrer des contextes de panne, notamment en mémoire non volatile ;
- obtenir des tables de paramétrage, de configuration, de contextes de panne et d'enregistrement ; et,
- gérer des statistiques avancées, telles que la durée de traitement des messages de simulation, de la pile IP (acronyme de *« Internet Protocol* » en terminologie anglo-saxonne) et de la pile de messages.

Selon un mode de réalisation particulier, le système de diagnostic est intégré au réseau de simulation et une seule connectique réseau est nécessaire. En outre, la fonction diagnostic est centralisée.

Il n'y a pas de charge des terminaux supplémentaires et l'investigation est réalisée en mode opérationnel sans déconnecter les noeuds.

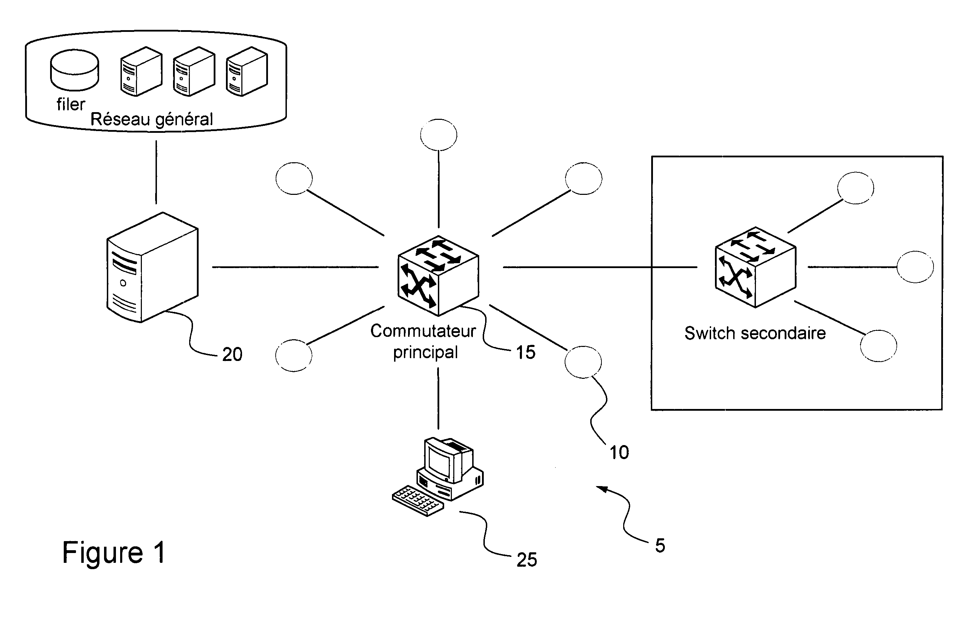

Pour ce faire, selon un mode de réalisation de l'invention, le réseau de simulation, illustré en Figure 1, comprend un ensemble de noeuds réseau aptes à fonctionner ensemble afin de réaliser la simulation de composants, notamment de composants avioniques connectés entre eux dans un réseau commuté de type *switch fabric.*

Ainsi, chacun des noeuds 10 du réseau 5 est connecté à un commutateur principal 15. Ces noeuds 10 sont notamment des noeuds de calcul, des cartes d'entrée / sortie, des noeuds intermédiaires et des concentrateurs.

A ce réseau 5 sont connectés un calculateur principal de simulation 20 (« *host* » en terminologie anglo-saxonne) sur le commutateur principal 15 et un équipement de diagnostic 25.

Afin de respecter au mieux le temps réel, le réseau est un réseau haut débit, par exemple un réseau de cent méga bits par seconde ou d'un giga bits par seconde.

Conformément à l'invention, un module, notamment un module logiciel (appelé « *plugin* » en terminologie anglo-saxonne) est installé dans différents noeuds du réseau à diagnostiquer, appelé module de diagnostic client, et dans l'équipement de diagnostic 25, appelé module de diagnostic serveur.

Ce module logiciel est un programme intégré à l'applicatif opérationnel de chaque noeud de l'interface électronique.

Conformément à l'invention, une mise en oeuvre particulière de la couche message est réalisée en s'appuyant autant que possible sur les couches de programmation POSIX (acronyme de *« Portable Operating System Interface »* en terminologie anglo-saxonne) du système d'exploitation des noeuds et de l'équipement de diagnostic 25.

En outre, l'équipement serveur de diagnostic doit réaliser, au démarrage, l'apprentissage de la topologie du réseau. Cet apprentissage est dynamique, c'est-à-dire qu'il est obtenu par interrogation des différents noeuds du réseau, notamment par l'émission d'un message spécifique d'identification et par traitement des messages réponses associées.

L'échange de messages peut être réalisée selon un mode synchrone ou un mode asynchrone (aussi appelé mode « TRAP » en terminologie anglo-saxonne).

Selon un mode de réalisation synchrone, une requête de diagnostic est émise par le terminal de diagnostic (noeud serveur) et une réponse est émise par le noeud diagnostiqué (noeud client) à l'issue du traitement.

Selon un mode de réalisation asynchrone, un traitement est activé au moyen d'un message *unicast,* c'est-à-dire selon un mode point à point, ou d'un message *multicast,* c'est-à-dire d'un message destiné à un groupe de noeuds réseau. L'obtention des données de diagnostic est dans ce cas réalisée périodiquement et automatiquement selon une période programmable (émission de messages spontanée et périodique par les noeuds clients configurés dans ce mode).

Conformément à l'invention, l'intrusion du diagnostic sur le fonctionnement temps réel de la simulation est maîtrisé, notamment par le contrôle des émissions des protocoles de la couche réseau, par la maîtrise de la latence d'accès concurrent à l'interface réseau des noeuds et par la maîtrise de la latence noyau et applicative induite sur les noeuds du réseau.

Conformément à l'invention, les modules logiciels utilisent l'interface de programmation d'application *socket* standard, notamment pour la mise en oeuvre du protocole UDP.

En outre, sur chacun des noeuds du réseau, notamment sur les noeuds d'interfaces électroniques, une gestion par service est réalisée de la façon suivante :
- une tâche gérant un port UDP spécifique pour les données de simulation. Cette tâche possède la priorité maximale ; et,
- une tâche gérant un port UDP spécifique pour les données de diagnostic. Cette tâche possède la priorité minimale.

En outre, la fragmentation des paquets IP lors de l'émission de messages vers des noeuds du réseau est interdite. Toute fragmentation de message doit donc être réalisée au niveau de la couche message afin de ne pas charger la pile IP, évitant de la sorte le risque de latence du noyau, ce dernier mettant en oeuvre un sémaphore (aussi appelé *« mutex* » pour *« Mutual Exclusion »* en terminologie anglo-saxonne) d'accès à l'unique interface réseau de chaque noeud.

De plus, l'émission de messages fragmentés est étalée temporellement, par exemple un message par cycle, soit toutes les 10 ms si la durée d'un cycle est de 10 ms.

Lorsque l'équipement de diagnostic souhaite émettre un message, notamment une trame Ethernet à destination d'un noeud du réseau dont il connaît l'adresse Internet aussi appelée adresse IP, il interroge sa mémoire tampon ARP à la recherche d'une entrée correspondant à l'adresse IP de la machine cible.

Une mémoire tampon ARP, aussi appelée un cache ARP, est un ensemble de couples (adresse IP, adresse physique) contenu dans la mémoire d'un ordinateur utilisant le protocole ARP, c'est à dire un espace mémoire dans lequel est enregistrée une table listant des correspondances adresse physique
- adresse IP de noeuds du réseau appartenant au même réseau logique. L'adresse physique est ici l'adresse MAC (acronyme de *« Media Access Control* » en terminologie anglo-saxonne) du noeud réseau.

Si l'adresse IP du destinataire est présente dans le cache ARP de l'émetteur, le système d'exploitation renseigne l'adresse physique de destination correspondante pour envoyer la trame Ethernet. Le mécanisme ARP s'arrête ici dans ce cas.

Dans le cas contraire, si l'adresse IP est absente de la mémoire tampon de l'émetteur, l'équipement de diagnostic place son émission en attente et effectue une requête ARP, notamment selon le mode *broadcast.* Cette requête est de type « quelle est l'adresse physique correspondant à l'adresse IP *adresselP ?* Répondez à *adressePhysique* ». Puisqu'une tellle requête est émise en mode *broadcast,* tous les noeuds connectés au réseau à travers le commutateur reçoivent la requête. Le noeud concerné répond alors à l'émetteur de la requête ARP.

Cette solution présente l'inconvénient de perturber le réseau de simulation temps réel.

Pour ne pas perturber la communication temps réel des données de simulation, les trames ARP générées automatiquement par le système d'exploitation sont bloquées en insérant des entrées permanentes (statiques) dans la mémoire tampon ARP.

Ainsi, conformément à l'invention, la mémoire tampon ARP est remplie au moyen d'entrées permanentes, notamment au moyen d'une interface de programmation POSIX.

Pour ce faire, une requête d'identification est tout d'abord émise en mode *multicast* par l'équipement de diagnostic (serveur), notamment par le module de diagnostic serveur, avant toute émission de messages *unicast* à destination de noeuds clients. Cette requête est émise à destination d'une adresse *multicast* convenue, sur laquelle les différents noeuds clients se sont préalablement abonnés.

A partir des réponses d'identification des noeuds du réseau présents, il est constitué des couples d'adresses (adresse physique, adresse IP). Ceci est réalisé par exemple par duplication explicite des couples (adresse physique, adresse IP) dans la couche message de la réponse d'identification. De la sorte, la topologie du réseau est constituée.

En outre, chaque couple (adresse physique, adresse IP) est placé en tant qu'entrée permanente, c'est-à-dire de façon statique dans le cache ARP avant toute émission de message de diagnostic, ces messages pouvant être des requêtes ou des réponses. Ensuite, par construction, aucun message de type ARP n'est émis par l'équipement de diagnostic ou par les noeuds.

Au cours du diagnostic, l'équipement de diagnostic, notamment le module de diagnostic serveur, émet des messages de préférence en mode *unicast,* le mode *multicast* étant néanmoins autorisé puisque ne générant pas de traffic ARP. Toutefois, afin d'éviter l'émission d'un grand nombre de messages pouvant « inonder » le réseau et donc perturber la simulation en temps réel, l'émission de messages de diagnostic en mode *broadcast* est proscrite.

Selon un mode de réalisation particulier sur le noeud serveur, l'adressage en mode *unicast* est réalisé par la tâche diagnostic de manière cyclique sur les clients, par exemple un message pour un client par cycle, avec une temporisation entre chaque émission.

En outre, en mode asynchrone, un message de fin du mode asynchrone doit être émis par le serveur de diagnostic avant la fin d'exécution du module de diagnostic pour éviter toute émission ultérieure de message ICMP (acronyme de « *Internet Control Message Protocol »* en terminologie anglo-saxonne) par les clients concernés (c'est à dire des clients dont le mode TRAP est activé), notamment l'émission de message « *ICMP port unreachable* ». Ce protocole est mis en oeuvre pour véhiculer des messages de contrôle et d'erreur.

Du côté des noeuds clients du réseau, le module de diagnostic client rend actif la couche IGMP (acronyme de « *Internet Group Management Protocol* » en terminologie anglo-saxonne) à l'initialisation de sorte à gérer le *multicast.*

A l'initialisation, le module de diagnostic client émet une requête d'abonnement à une adresse *multicast* spécifique convenue, notamment l'adresse IP de diagnostic pour configurer la table de redirection du commutateur pour la gestion des groupes *multicast,* de sorte à éviter l'émission en mode *broadcast* par le commutateur d'un paquet *multicast* qu'il doit router et qui n'a aucune interface abonnée à cette adresse.

En outre, afin d'empêcher toute émission de message ARP, le couple d'adresses (adresse physique, adresse IP) de l'équipement de diagnostic (serveur) est obtenu par les noeuds clients lors de la requête d'identification, notamment par duplication explicite du couple MAC / IP (adresse physique, adresse IP) dans la couche message de la requête d'identification, puis est placé en tant qu'entrée permanente, c'est-à-dire de façon statique, dans le cache ARP avant toute émission *unicast* de message de diagnostic.

Au cours du diagnostic, les noeuds du réseau, notamment les modules de diagnostic client, émettent des messages en mode *unicast.* Ces messages sont émis, en mode synchrone, sur réception d'une requête, et sont émis de façon périodique quand le mode de communication asynchrone est activé (mode TRAP).

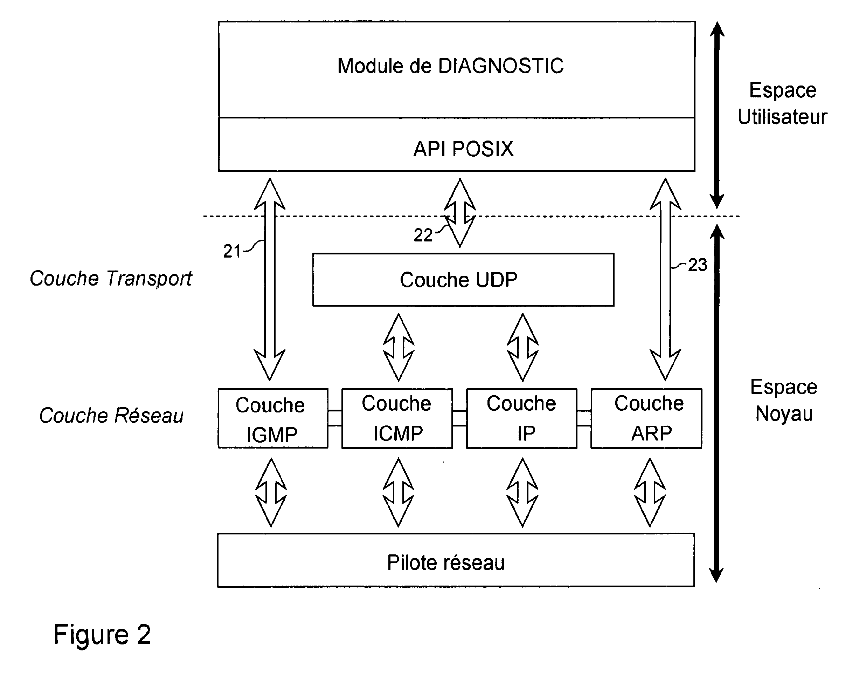

Il est maintenant décrit, en référence à la Figure 2, les couches de programmation du système et les interactions avec les modules de diagnostic client et serveur.

La programmation des modules de diagnostic client et serveur utilise une interface de programmation POSIX située dans l'espace utilisateur du système d'exploitation.

Cet espace est situé, selon la hiérarchie des couches de communication, au dessus de l'espace noyau.

L'espace noyau comprend, au plus bas de la hiérarchie des couches protocolaires, un pilote réseau (appelé *« driver »* en terminologie anglo-saxonne) sur lequel une couche réseau s'appuie, comprenant notamment une couche IGMP, une couche ICMP, une couche IP et une couche ARP.

Au dessus de la couche réseau et s'appuyant sur la couche ICMP ou sur la couche IP se trouve la couche UDP formant en partie la couche transport.

La référence 21 illustre la communication entre le module de diagnostic client et la couche IGMP, via l'interface POSIX, afin de réaliser l'abonnement à une adresse IP *multicast.*

La référence 22 illustre la communication entre le module de diagnostic client ou le module de diagnostic serveur et la couche UDP, via l'interface POSIX, pour l'émission et la réception de message asynchrone.

La référence 23 illustre la communication entre le module de diagnostic client ou le module de diagnostic serveur et la couche ARP, via l'interface POSIX, afin de réaliser l'ajout d'entrées permanentes dans le cache ARP.

Naturellement, pour satisfaire des besoins spécifiques, une personne compétente dans le domaine de l'invention pourra appliquer des modifications dans la description précédente.

## Revendications

1. Procédé d'identification, dans un noeud serveur (25) connecté à un réseau (5), d'au moins un noeud client (10) connecté au réseau, **caractérisé en ce qu'**il comprend les étapes suivantes,
- une étape d'émission d'un message d'identification à au moins un noeud client, le message d'identification comprenant l'adresse physique et l'adresse Internet dudit noeud serveur ;
- une étape de réception d'au moins un message contenant le couple d'adresses d'au moins un noeud client en réponse à l'étape d'émission d'un message d'identification, ledit couple d'adresses, comprenant une adresse physique et une adresse Internet, étant explicitement dupliqué dans la partie des données applicatives dudit message reçu ; et
- une étape de mémorisation statique dudit couple d'adresses dans une table de correspondance entre une adresse physique et une adresse Internet dans ledit noeud serveur,
lesdites étapes d'émission d'un message d'identification et de réception d'au moins un message comprenant un couple d'adresses étant mises en oeuvre dans un module applicatif.

2. Procédé d'identification selon la revendication précédente **caractérisé en ce que** l'émission dudit message d'identification est réalisée en mode *multicast.*

3. Procédé d'échange de données de diagnostic dans un réseau entre un noeud du réseau et un terminal de diagnostic connecté au réseau, le procédé étant **caractérisé en ce qu'**il comprend les étapes suivantes,
- identification d'au moins un noeud du réseau selon l'une quelconque des revendications précédentes ; et,
- transmission d'une commande de diagnostic audit au moins un noeud identifié du réseau.

4. Procédé d'identification, dans un noeud client (10) connecté à un réseau (5), d'un noeud serveur (25) connecté au réseau, **caractérisé en ce qu'**il comprend les étapes suivantes,
- une étape de réception d'un message d'identification provenant dudit noeud serveur, le message d'identification comprenant l'adresse physique et l'adresse Internet dudit noeud serveur ;
- une étape de mémorisation statique desdites adresses physique et Internet dudit noeud serveur dans une table de correspondance entre une adresse physique et une adresse Internet dans ledit noeud client ; et
- une étape d'émission audit noeud serveur d'un message contenant le couple d'adresses dudit noeud client en réponse à l'étape de réception du message d'identification, ledit couple d'adresses dudit noeud client, comprenant une adresse physique et une adresse Internet dudit noeud client, étant explicitement dupliqué dans la partie des données applicatives dudit message émis,
lesdites étapes de réception d'un message d'identification et d'émission d'un message comprenant un couple d'adresses étant mises en oeuvre dans un module applicatif.

5. Procédé d'échange de données de diagnostic, dans un noeud client connecté à un réseau, **caractérisé en ce qu'**il comprend les étapes suivantes,
- identification d'au moins un noeud serveur selon la revendication précédente ; et,
- activation d'une tâche de gestion de données de diagnostic à la réception d'une commande de diagnostic selon l'état d'activation d'une tâche de gestion de données de simulation.

6. Procédé selon la revendication précédente **caractérisé en ce que** les tâches de gestion de données de diagnostic et de simulation utilisent des ports spécifiques différents.

7. Procédé selon l'une quelconque des revendications précédentes selon lequel la fragmentation desdits messages échangés est réalisée au niveau de la couche message.

8. Procédé selon l'une quelconque des revendications précédentes mettant en oeuvre le protocole de communication UDP et la couche de programmation POSIX,

9. Programme d'ordinateur comprenant des instructions adaptées à la mise en oeuvre de chacune des étapes du procédé selon l'une quelconque des revendications précédentes.

10. Dispositif comprenant des moyens adaptés à la mise en oeuvre de chacune des étapes du procédé selon l'une quelconque des revendications 1 à 8.

## Claims

1. Method for identification, in a server node (25) connected to a network (5), of at least one client node (10) connected to the network, **characterized in that** it comprises the following steps,
- a step of transmitting an identification message to at least one client node, the identification message comprising the physical address and the Internet address of the server node;
- a step of receiving at least one message containing the pair of addresses of at least one client node in response to the step of transmitting an identification message, the said pair of addresses, comprising a physical address and an Internet address, being explicitly duplicated in the application data portion of the said received message; and
- a step of static storing of the said pair of addresses in a table of correspondence between a physical address and an Internet address in the said server node,
said steps of transmitting an identification and reception message of at least one message containing a pair of addresses being implemented in an application module.

2. Method for identification according to the preceding claim, **characterized in that** transmission of the said identification message is carried out in *multicast* mode.

3. Method for exchange of diagnostic data in a network between a node of the network and a diagnostic terminal connected to the network, the method being **characterized in that** it comprises the following steps,
- identifying at least one node of the network according to any one of the preceding claims; and
- transmitting a diagnostic command to the said at least one identified node of the network.

4. Method for identification, in a client node (10) connected to a network (5), of a server node (25) connected to the network, **characterized in that** it comprises the following steps,
- a step of receiving an identification message originating from the said server node, the identification message comprising the physical address and the Internet address of the server node;
- a step of static storing of the said physical and Internet addresses of the said server node in a table of correspondence between a physical address and an Internet address in the said client node; and
- a step of transmitting to the said server node a message containing the pair of addresses of the said client node in response to the step of receiving the identification message, the said pair of addresses of the said client node, comprising a physical address and an Internet address of the said client node, being explicitly duplicated in the application data portion of the said transmitted message,
said steps of transmitting an identification and reception message of at least one message containing a pair of addresses being implemented in an application module.

5. Method for exchange of diagnostic data, in a client node connected to a network, **characterized in that** it comprises the following steps,
- identifying at least one server node according to the preceding claim; and
- activating a diagnostic data management task upon reception of a diagnostic command according to the state of activation of a simulation data management task.

6. Method according to the preceding claim, **characterized in that** the diagnostic and simulation data management tasks use different specific ports.

7. Method according to any one of the preceding claims, according to which fragmentation of the said exchanged messages is carried out at the message layer.

8. Method according to any one of the preceding claims, implementing the UDP communication protocol and the POSIX programming layer.

9. Computer program comprising instructions adapted for the implementation of each of the steps of the method according to any one of the preceding claims.

10. Device comprising means adapted for the implementation of each of the steps of the method according to any one of claims 1 to 8.

## Patentansprüche

1. Verfahren, um in einem mit einem Netzwerk (5) verbundenen Server-Knoten (25) zumindest einen mit dem Netzwerk verbundenen Client-Knoten (10) zu identifizieren, **dadurch gekennzeichnet, dass** es die nachfolgenden Schritte umfasst:
- einen Schritt des Aussendens einer Identifikations-Nachricht an zumindest einen Client-Knoten, wobei die Identifikations-Nachricht die physische Adresse und die Internet-Adresse des Server-Knotens enthält,
- einen Schritt des Empfangs zumindest einer Nachricht, die das Adressenpaar von zumindest einem Client-Knoten enthält, in Antwort auf den Schritt des Aussendens einer Identifikations-Nachricht, wobei das eine physische Adresse und eine Internet-Adresse enthaltende Adressenpaar explizit in den Teil der Anwendungsdaten der empfangenen Nachricht übertragen wird, und
- einen Schritt der statischen Einspeicherung des Adressenpaares in eine Verknüpfungstabelle zur Verknüpfung zwischen einer physischen Adresse und einer Internet-Adresse in dem Server-Knoten, wobei die Schritte des Aussendens einer Identifikations-Nachricht und des Empfangs zumindest einer ein Adressenpaar enthaltenden Nachricht in einem Anwendungsmodul durchgeführt werden.

2. Identifikationsverfahren nach dem vorangehenden Anspruch,
**dadurch gekennzeichnet, dass** das Aussenden der Identifikations-Nachricht im Multicast-Modus erfolgt.

3. Verfahren zum Austausch von Diagnosedaten in einem Netzwerk zwischen einem Knoten des Netzwerks und einem mit dem Netzwerk verbundenen Diagnose-Endgerät, wobei das Verfahren **dadurch gekennzeichnet ist, dass** es die nachfolgenden Schritte umfasst:
- Identifikation zumindest eines Knotens des Netzwerks nach einem der vorangehenden Ansprüche, und
- Übertragung eines Diagnose-Befehls an den zumindest einen identifizierten Knoten des Netzwerks.

4. Identifikations-Verfahren, um in einem mit einem Netzwerk (5) verbundenen Client-Knoten (10) einen mit dem Netzwerk verbundenen Server-Knoten (25) zu identifizieren, **dadurch gekennzeichnet, dass** es die nachfolgenden Schritte umfasst:
- einen Schritt des Empfangs einer vom Server-Knoten stammenden Identifikations-Nachricht, wobei die Identifikations-Nachricht die physische Adresse und die Internet-Adresse des Server-Knotens enthält,
- einen Schritt der statischen Einspeicherung der physischen Adresse und der Internet-Adresse des Server-Knotens in eine Verknüpfungstabelle zur Verknüpfung zwischen einer physischen Adresse und einer Internet-Adresse in dem Client-Knoten, und
- einen Schritt des Aussendens zumindest einer Nachricht an den Server-Knoten, welche Nachricht das Adressenpaar des Client-Knotens enthält, in Antwort auf den Schritt des Empfangs der Identifikations-Nachricht, wobei das eine physische Adresse und eine Internet-Adresse des Client-Knoten enthaltende Adressenpaar des Client-Knotens explizit in den Teil der Anwendungsdaten der ausgesandten Nachricht übertragen wird,
wobei die Schritte des Empfangs einer Identifikations-Nachricht und des Aussendens einer ein Adressenpaar enthaltenden Nachricht in einem Anwendungsmodul durchgeführt werden.

5. Verfahren zum Austausch von Diagnose-Daten in einem mit einem Netzwerk verbundenen Client-Knoten, **dadurch gekennzeichnet, dass** es die nachfolgenden Schritte umfasst:
- Identifikation zumindest eines Server-Knotens nach dem vorangehenden Anspruch, und
- Aktivierung eines Tasks zum Verwalten der Diagnose-Daten bei Empfang eines Diagnose-Befehls je nach Aktivierungszustand eines Tasks zum Verwalten von Simulationsdaten.

6. Verfahren nach dem vorangehenden Anspruch,
**dadurch gekennzeichnet, dass** die Tasks zum Verwalten der Diagnose- und der Simulationsdaten unterschiedliche spezifische Anschlüsse verwenden.

7. Verfahren nach einem der vorangehenden Ansprüche,
wobei die Fragmentierung der ausgetauschten Nachrichten im Bereich der Nachrichtenschicht erfolgt.

8. Verfahren nach einem der vorangehenden Ansprüche, wobei das Kommunikationsprotokoll UDP und die Programmierungsschicht POSIX Anwendung finden.

9. Computer-Programm mit Anweisungen, die zum Durchführen eines jeden der Schritte des Verfahrens nach einem der vorangehenden Ansprüche geeignet sind.

10. Vorrichtung mit Mitteln, die zum Durchführen eines jeden der Schritte des Verfahrens nach einem der Ansprüche 1 bis 8 geeignet sind.
